# EUROPEAN PATENT APPLICATION

(11) **EP 2 027 965 A1**
(43) Date of publication of application: **25.02.2009**
(21) Application number: 08155152.5
(22) Date of filing: 25.04.2008
(51) Int. Cl.: B23Q 1/52

(54) **Rotatable worktable assembly of a machining apparatus**

(30) Priority: 23.08.2007 TW 96131226
(71) Applicant: Alex-Tech Machinery Industrial Co. Ltd., Shen Kang Hsiang Taichung Hsien (TW)
(72) Inventor: Tsai, Peter T.H., Taipei City (TW)
(74) Representative: Texier, Christian

(57) **Abstract**

A rotatable worktable assembly (2) includes: a support (3) including a base (31) that defines a rotation axis (L), and a contact part (32) that is provided on the base (31) and that has a contact surface (324) surrounding the rotation axis (L); a wear-resistant coating (322) formed on the contact surface (324) of the contact part (32) and made from a resin-containing material; a shaft (41) extending rotatably into the base (31), in sliding contact with the wear-resistant coating (322), and rotatable relative to the base (31) about the rotation axis (L); and a worktable (42) disposed over the base (31) and connected to the shaft (41) so as to be co-rotatable therewith about the rotation axis (L).

## Description

The invention relates to a rotatable worktable assembly, more particularly to a rotatable worktable assembly including a support with a wear-resistant coating in sliding contact with a shaft of a worktable.

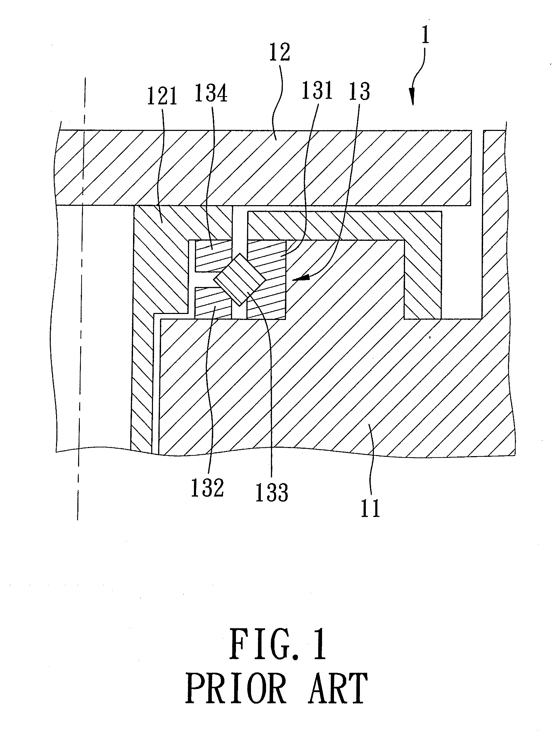

Referring to Figure 1, a conventional rotatable worktable assembly 1 of a machining apparatus is shown to include a base 11, a worktable 12 with a shaft 121 disposed on the base 11, and a precision bearing 13 disposed between the base 11 and the worktable 12. The precision bearing 13 includes an outer race 131 disposed on the base 11, an inner race 132 disposed on the base 11, a plurality of roller members 133 disposed between the outer and inner races 131, 132, and a rotary ring 134 mounted fixedly on the shaft 121 and in sliding contact with the roller members 133. Although the precision bearing 13 provides excellent support, i.e., relatively low friction and wear, for the worktable 12, it is normally not available and a relatively long waiting time is required to acquire the same, which results in an increase in the production time of the machining apparatus.

Therefore, an object of the present invention is to provide a rotatable worktable assembly that can overcome the aforesaid drawback associated with the prior art.

Accordingly, a rotatable worktable assembly of this invention comprises: a support including a base that defines a rotation axis, and a contact part that is provided on the base and that has a contact surface surrounding the rotation axis; a wear-resistant coating formed on the contact surface of the contact part and made from a resin-containing material; a shaft extending rotatably into the base, in sliding contact with the wear-resistant coating, and rotatable relative to the base about the rotation axis; and a worktable disposed over the base and connected to the shaft so as to be co-rotatable therewith about the rotation axis.

Other features and advantages of the present invention will become apparent in the following detailed description of the preferred embodiment with reference to the accompanying drawings, of which:
Fig. 1 is a fragmentary sectional view of a conventional rotatable worktable assembly;
Fig. 2 is a fragmentary sectional view of the preferred embodiment of a rotatable worktable assembly according to the present invention; and
Fig. 3 is an enlarged sectional view to illustrate a wear-resistant coating of the preferred embodiment.

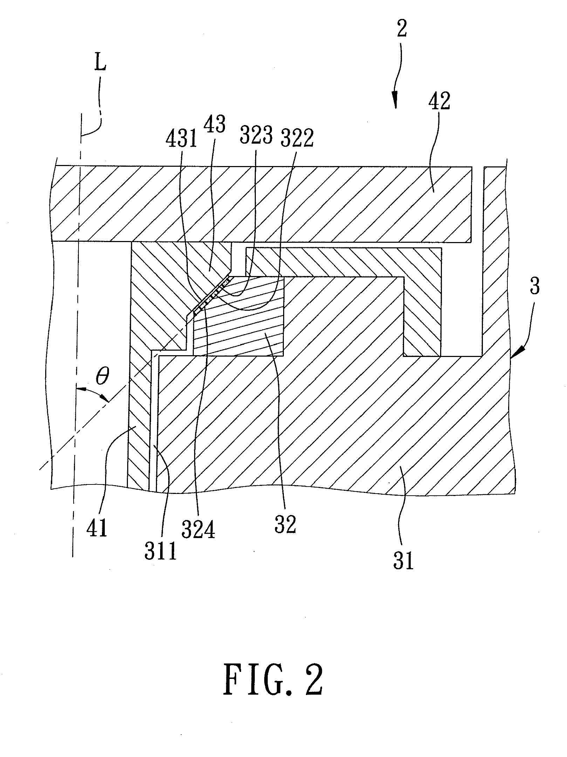

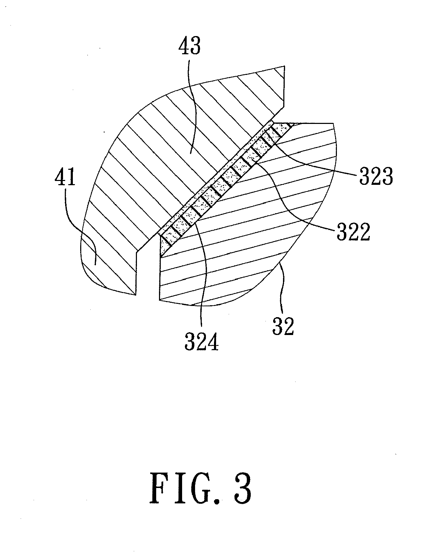

Referring to Figures 2 and 3, the preferred embodiment of a rotatable worktable assembly 2 according to the present invention is shown to include: a support 3 including a base 31 that is formed with a central hole 311 and that defines a rotation axis (L) extending through the central hole 311, and a ring-shaped contact part 32 that is provided on the base 31 and that has a ring-shaped contact surface 324 surrounding the rotation axis (L); a wear-resistant coating 322 formed on the contact surface 324 of the contact part 32 and made from a resin-containing material; a shaft 41 extending rotatably into the central hole 311 in the base 31, in sliding contact with the wear-resistant coating 322, and rotatable relative to the base 31 about the rotation axis (L); and a worktable 42 disposed over the base 31 and connected to the shaft 41 so as to be co-rotatable therewith about the rotation axis (L).

The resin-containing material is selected from epoxy resin and fluorine-containing resin.

Preferably, the rotatable worktable assembly 2 further includes a lubricant 323 applied on the wear-resistant coating 322.

The contact surface 324 of the contact part 32 is inclined relative to the rotation axis (L) at an angle (θ) ranging from 45 to 90 degrees. In this embodiment, the angle (θ) between the contact surface 324 of the contact part 32 and the rotation axis (L) is 45 degrees. The contact part 32 is preferably detachably secured to the base 31. Alternatively, the contact part 32 and the base 31 may be integrally formed.

In this embodiment, the shaft 41 has an enlarged head 43 extending from the worktable 42 and having an inclined surface 431 that is in sliding and face-to-face contact with the wear-resistant coating 322.

With the inclusion of the contact part 32 and the wear-resistant coating 322 in the rotatable worktable assembly 2 of this invention, the aforesaid drawback associated with the prior art can be eliminated.

## Claims

1. A rotatable worktable assembly (2) of a machining apparatus, comprising:
a support (3) including a base (31) that defines a rotation axis (L), and a contact part (32) that is provided on said base (31) and that has a contact surface (324) surrounding said rotation axis (L);
a wear-resistant coating (322) formed on said contact surface (324) of said contact part (32) and made from a resin-containing material;
a shaft (41) extending rotatably into said base (31), in sliding contact with said wear-resistant coating (322), and rotatable relative to said base (31) about said rotation axis (L); and
a worktable (42) disposed over said base (31) and connected to said shaft (41) so as to be co-rotatable therewith about said rotation axis (L).

2. The rotatable worktable assembly (2) as claimed in claim 1, wherein said resin-containing material is selected from epoxy resin and fluorine-containing resin.

3. The rotatable worktable assembly (2) as claimed in claim 1, further comprising a lubricant (323) applied on said wear-resistant coating (322).

4. The rotatable worktable assembly (2) as claimed in claim 1, wherein said contact surface (324) of said contact part (32) is inclined relative to said rotation axis (L) at an angle (θ) ranging from 45 to 90 degrees.

5. The rotatable worktable assembly (2) as claimed in claim 4, wherein said angle (θ) between said contact surface (324) of said contact part (32) and said rotation axis (L) is 45 degrees.

6. The rotatable worktable assembly (2) as claimed in claim 1, wherein said contact part (32) is detachably secured to said base (31).
